# FASCICULE DE BREVET EUROPEEN

(11) **EP 2 328 804 B1**
(45) Date de publication et mention de la délivrance du brevet: **07.11.2012**
(21) Numéro de dépôt: 09741329.8
(22) Date de dépôt: 22.09.2009
(51) Int. Cl.: B64C 1/12, B64C 1/40

(54) **STRUCTURE DE FUSELAGE POUR FIXATION COMBINEE DE MATELAS D'ISOLATION ET D'EQUIPEMENTS, AERONEF INCORPORANT UNE TELLE STRUCTURE**
RUMPFSTRUKTUR FÜR DIE KOMBINIERTE BEFESTIGUNG EINER ISOLIERMATTE UND VON VORRICHTUNGEN SOWIE LUFTFAHRZEUG MIT SOLCH EINER STRUKTUR
FUSELAGE STRUCTURE FOR THE COMBINED FASTENING OF AN INSULATION MATTRESS AND DEVICES, AND AIRCRAFT INCLUDING SUCH A STRUCTURE

(30) Priorité: 23.09.2008 FR 0856397
(43) Date de publication de la demande: 08.06.2011
(73) Titulaire: AIRBUS OPERATIONS, 31060 Toulouse (FR)
(72) Inventeur: DERVAULT, Franck, F-03200 Vichy (FR); DANTOU, Nicolas, F-31770 Colomiers (FR); MERCADIER, Gilles, F-81370 Saint Sulpice (FR)
(74) Mandataire: Le Tourneau, Augustin
(86) Numéro de dépôt international: PCT/FR2009/001118
(87) Numéro de publication internationale: WO 2010/034903

(56) Documents cités:
- WO-A-2005/068290
- US-A1- 2005 082 431
- US-B1- 6 883 753

## Description

La présente invention se rapporte à l'installation de systèmes dans les fuselages d'aéronefs, notamment de transport civil, et plus particulièrement à une structure de fixation combinée de matelas d'isolation thermo-phonique et d'équipements tels que des systèmes embarqués, des faisceaux de câbles électriques ou de conduits fluidiques (air, eau, oxygène, liquide hydraulique).

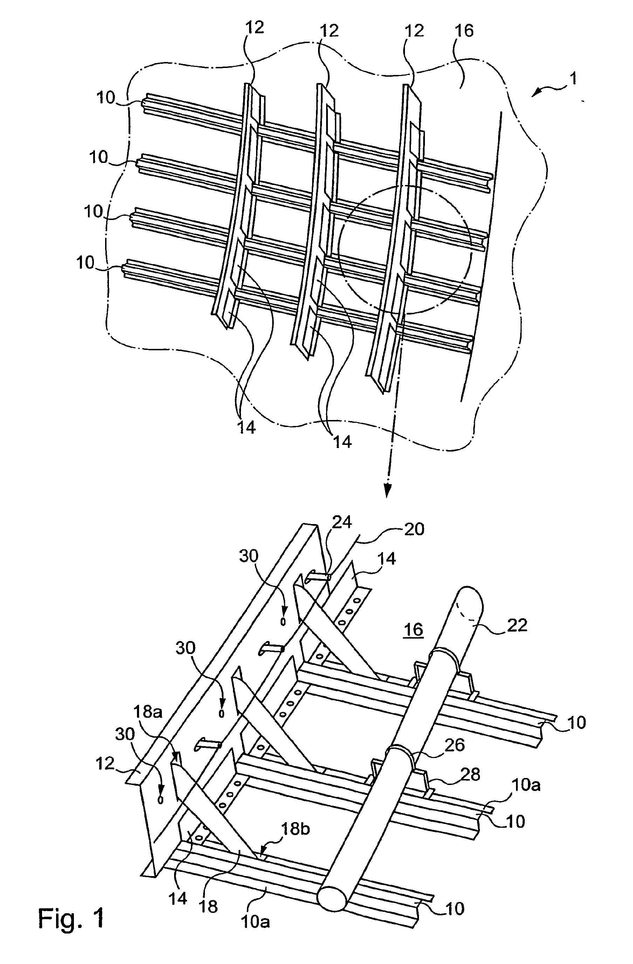

Il est connu d'utiliser des points d'ancrage sur la structure même du fuselage, comme représenté en **figure 1****.** Ces points d'ancrage consistent généralement en des perçages réalisés dans les éléments de structure primaire tels que les cadres ou les lisses. Des pions plastiques ou des dispositifs d'attache améliorés tels ceux décrits dans la demande FR 2 904 804 sont alors utilisés pour fixer les équipements et matelas à l'aide dessus les cadres et lisses.

Cependant, ces points d'ancrage présentent de nombreux inconvénients pour la structure de l'aéronef.

D'une part, les perçages sur les cadres et les lisses affaiblissent la structure et sont sources de risque fatigue pour ces éléments de structure. Ainsi, on est couramment amené à limiter le nombre de points d'ancrage à ce qui est seulement nécessaire pour fixer les équipements et matelas.

Cet affaiblissement de structure est encore plus important dans les structures contemporaines d'aéronefs, car ces dernières, majoritairement de type composite, présentent des caractéristiques de résistance plus faibles pour tout ce qui se rapporte aux perforations (trou occupé ou libre non chargé, tenue au matage, etc.).

On note également que la tendance actuelle pour l'installation des matelas d'isolation et équipements dans le fuselage est au montage dit "mécano", par lequel on monte des fixations avec jeux sur la structure primaire. Ce type de montage permet d'accroître la rapidité de montage et de conception des schémas de montage. Cependant, ces jeux accroissent encore plus les contraintes sur ces parties affaiblies de la structure.

Bien que l'on ait déjà réfléchi à apporter des renforcements locaux aux environs de ces perçages, il n'existe pas de solution économiquement et techniquement viables pour créer de tels renforts locaux sur les cadres ou lisses lorsque peu de marge (largeur de matière) n'est disponible autour des perçages. Notamment, pour des structures composites, les règles de prise de plis imposent des zones de renforts très étendues, parfois incompatibles avec les dimensions des pièces.

D'autre part, pour éviter ces problèmes de renforcements locaux, certains supports fixes peu chargés sont parfois prévus, par collage, à divers emplacements sur le fuselage afin de recevoir les matelas ou équipements. Cependant, ces supports fixes doivent être installés à des emplacements leur conférant peu de charge, mais également satisfaire aux schémas de développement des réseaux dans l'aéronef. Ils nécessitent donc des études préalables longues et coûteuses.

D'autre part également, les lisses en oméga, celles classiquement utilisées, sont particulièrement délicates à percer, au niveau des âmes ou de la semelle interne, en raison de risques de délaminage en face interne qui s'avèrent impossibles à inspecter et détecter, ainsi que de risques d'altérer la peau externe du fuselage. Il est ainsi laborieux de pourvoir des points d'ancrage sur une telle partie de la structure de fuselage.

On connaît également, de la publication US 2005/0082431, un support qui vient se clipser sur les cadres du fuselage de l'avion, laissant des éléments à fixer sur le support à distance de la peau externe du fuselage.

La publication WO 2005/068290 décrit, quant à elle, un revêtement anti-feu fixé au fuselage d'un avion à l'aide d'éléments de fixation traversant des épaulements stabilisant les lisses du fuselage.

L'invention vise à palier au moins l'un des inconvénients susmentionnés en proposant de grouper les points d'ancrage, de manière modulaire, sur des pièces de structure non critiques, peu chargées et facilement accessibles.

A cet effet, l'invention vise notamment une structure de fixation telle que définie dans la revendication 1.

Selon l'invention, on fournit ainsi des moyens de fixation des matelas et équipements sans toucher aux lisses et cadres, et seul un nombre très limité de fixations est à prévoir sur les stabilisateurs pour maintenir la réglette. On entend par "réglette" tout type de pièce mécanique longiligne permettant de relier les deux stabilisateurs et supportant les moyens de fixation. L'invention supprime ainsi tout affaiblissement des cadres et lisses et réduit fortement celui des stabilisateurs.

Par ailleurs, on regroupe l'ensemble des moyens de fixation sur une pièce structurelle qui, au final, est peu chargée en effort, puisqu'elle vient en complément de la structure classique. Ainsi, on supprime les supports fixes peu chargés et leurs développements préalables. En outre, du fait que la réglette est peu chargée, l'affaiblissement procuré par les moyens de fixation prévus sur celle-ci ne constitue pas un handicap.

Dans un mode de réalisation, lesdits moyens de fixation de la réglette comprennent une pluralité de perçages préformés agencés pour recevoir lesdits moyens correspondants de fixation et disposées dans la partie de la réglette entre les deux stabilisateurs.. Une telle réglette est ainsi vue comme un système "modulaire" d'accroche puisque des perçages sont disponibles et utilisés en fonction des besoins. Ainsi, une nouvelle configuration (nouveau cheminement d'eau, par exemple) peut être rapidement déployée dans un avion existant, car elle ne nécessite ni de nouveaux perçages, ni l'isolation de la zone à percer pour confiner les poussières produites, par exemple celles de matière CFRP ("*Carbon Fiber Reinforced Plastic*" selon la terminologie anglo-saxonne) qui pourraient provoquer des chocs électriques sur d'autres équipements tels des cartes électroniques.

Afin de minimiser l'impact de la fixation de la réglette sur le potentiel mécanique des stabilisateurs auxquels elle est fixée, on prévoit d'adapter le dessin de l'âme des stabilisateurs afin qu'ils supportent la fonction de fixation en plus de celle mécanique.

Selon une configuration de l'invention, au moins une partie de ladite réglette constitue une partie d'un des deux stabilisateurs. Dans cette réalisation, la réglette est intégrée (en une seule pièce) à l'un des stabilisateurs ce qui permet à ce dernier de ne pas être affaibli, du fait de fixations à la réglette, au niveau de la partie supportant les efforts mécaniques entre lisse et cadre. L'extrémité du stabilisateur s'étendant en réglette est, elle, pourvue de moyens de fixations pour venir se fixer avec le stabilisateur faisant face.

En particulier, les deux stabilisateurs comprennent, chacun, une portion s'étendant sous forme de partie de réglette et sont fixés l'un à l'autre par les extrémités libres respectives des deux parties de réglette. Dans cette configuration, on peut notamment choisir que chaque stabilisateur intègre, par exemple, la moitié de la réglette. Ainsi, il est possible d'utiliser un seul et même type de stabilisateur, ce qui simplifie la production de ceux-ci et leur approvisionnement aux chaînes de montage.

Dans un mode de réalisation de l'invention, une pluralité de réglettes reliant une pluralité respective de paires de stabilisateurs se faisant face et disposée en quinconce dans le fuselage.

Grâce à cette architecture à géométrie régulière, les matelas d'isolation thermo-phonique, utilisés pour couvrir le fuselage dans sa partie interne, peuvent être standard. En effet, alors que, dans les solutions de l'art antérieur, les positions disparates des moyens de fixation nécessitaient un découpage au cas par cas des matelas d'isolation en fonction de la zone de fuselage ou de nouveaux points d'accroche à créer, le regroupement de ces moyens de fixation sur des réglettes et l'agencement de ces dernières de façon régulière permet de délimiter des zones régulières (formées par les cadres et les réglettes) pour l'intégration des matelas. On diminue ainsi le nombre de dessins de matelas à utiliser, et donc les coûts de fabrication, de pose et d'entretien/maintenance.

En outre, la fixation en quinconce permet de former un ensemble solidaire des matelas puisque ceux-ci se rattachent les uns aux autres, également en quinconce.

Selon une configuration de l'invention, ladite réglette comprend une âme plane et un rebord supérieur perpendiculaire à l'âme principale de sorte à former une surface de support desdits équipements à fixer. En particulier, ladite réglette a une forme générale de "L" renversé formé par l'âme verticale et le rebord supérieur. Ainsi, la fixation et la stabilité des équipements sur la réglette sont améliorées.

Selon une caractéristique particulière, lesdits moyens de fixation de la réglette comprennent une pluralité de perçages prévus dans ladite âme et au moins un élément de fixation, ledit élément de fixation présentant une partie basse pourvue d'un pion apte à s'engager dans un des perçages, une partie intermédiaire localement en forme de "U" renversé et de dimension sensiblement égale audit rebord supérieur de sorte à venir s'appuyer dessus, et une partie supérieure comprenant un moyen de maintien ou de support desdits équipements. A titre d'exemple, cette partie supérieure peut contenir un ou plusieurs parmi une pince pour câble, un rebord de soutien, des oeillets pour recevoir des colliers de fixation. La forme en "U" renversé permet notamment de venir "clipser" le rebord de soutien afin d'assurer une fixation efficace de l'élément de fixation. Grâce à de tels éléments amovibles de fixation, également appelés pions, il est aisé de déployer des réseaux dans le fuselage en s'appuyant sur les réglettes pré-percées, tel un montage en "kit". L'accroche de ces éléments sur la réglette se fait par simple "clippage".

Selon une autre caractéristique particulière, ladite réglette comprend des pattes en forme de "L" s'étendant sous ladite âme et alternativement orientées de part et d'autre de ladite âme, chaque patte comprenant, dans le retour du "L", au moins un moyen de fixation apte à recevoir un matelas d'isolation. Ces pattes présentent une double fonction: d'une part la fixation des matelas, par exemple via des perçages et fixations correspondantes, et d'autre part le support de ceux-ci grâce à la surface du rebord du "L", réduisant de la sorte les efforts mécaniques subis directement par les pions de fixation.

Dans un mode de réalisation, ladite réglette, les stabilisateurs et le cadre comprennent une face métallisée et une face non métallisée, ladite réglette et un stabilisateur étant fixés par leurs faces métallisées, chaque stabilisateur et le cadre correspondant étant fixés au niveau de leurs faces non métallisées par des moyens de fixation traversant assurant une conduction électrique entre leurs faces métallisées opposées. Ainsi, un maillage conducteur est obtenu sur l'ensemble du fuselage, assurant une protection électromagnétique efficace.

L'invention vise également un aéronef comprenant une structure de fixation telle que présentée ci-dessus.

De façon optionnelle, l'aéronef peut comprendre des moyens se rapportant aux caractéristiques de structure présentées ci-dessus.

Outre les avantages exposés ci-dessus, l'invention permet également une réduction du coût et du cycle des modifications, une réduction du cycle en chaîne d'assemblage final (cycle d'installation des harnais de fixation dans la cabine, par exemple), une réduction du cycle de conversion cabine en exploitation en simplifiant l'implantation ou la modification de harnais électriques sans nouvelle installation de supports fixes, une standardisation des procédures dans les deux cas précédents, et également l'absence de perçage nécessaire pour installer de nouveaux câblages ou conduites.

Le profit apporté par l'invention est d'autant plus grand que la structure de l'aéronef est composite.

D'autres particularités et avantages de l'invention apparaîtront encore dans la description ci-après, illustrée par les dessins ci-joints, dans lesquels :
- la **figure 1** représente une structure de fuselage et la fixation d'équipements et matelas d'isolation sur celle-ci conformément à l'art antérieur;
- la **figure 2** représente la répartition des points d'accroche des équipements et matelas de l'art antérieur;
- la **figure 3** est une vue en coupe d'une structure de fuselage de l'art antérieur munie de points d'accroche;
- la **figure 4** représente une vue générale d'un premier exemple de l'invention;
- la **figure 5** représente la réglette de fixation de la **figure 4****;**
- les **figures 6** et **7** représentent des systèmes d'accroche d'équipements à l'aide de la réglette de la **figure 5****;**
- la **figure 8** illustre l'architecture générale de la structure de fuselage de l'exemple de la **figure 4****;**
- la **figure 9** illustre un deuxième exemple de l'invention;
- les **figures 10** et **11** illustrent un premier exemple de fixation d'un matelas d'isolation de type souple sur une réglette selon l'invention;
- les **figures 12** et **13** illustrent un deuxième exemple de fixation d'un matelas d'isolation de type rigide sur une réglette selon l'invention; et
- les **figures 14** et **15** illustrent la métallisation des pièces de la structure de fuselage de l'invention.

La structure de fuselage 1 de l'art antérieur représentée sur les **figures 1** à **3** comprend des lisses longitudinales 10 en oméga et des cadres 12 reposant perpendiculairement sur les lisses 10, selon des pas constants. Des clips 14 en "L" de maintien des cadres sont disposés au niveau du cadre 12 entre deux lisses 10 consécutives, et sont fixés respectivement aux cadres et aux semelles 10a des lisses. La peau 16 du fuselage est rapportée sur la semelle 10a des lisses 10 et sur les clips 14, par rivetage.

Comme illustré sur le détail de la **figure 1****,** des stabilisateurs 18 sont prévus à chaque intersection entre un cadre 12 et une lisse 10. Ces stabilisateurs 18 comprennent une âme se terminant à deux extrémités par des rebords perpendiculaires 18a et 18b de sorte à les fixer, par rivetage, respectivement au cadre 12 et à la lisse 10 correspondants. En particulier, les stabilisateurs sont fixés au niveau de la semelle 10a des lisses.

Les stabilisateurs 18 ont pour fonction de retenir le cadre 12 en l'empêchant de basculer vers l'avant ou vers l'arrière, ce que l'on appelle aussi le déversement. Par ailleurs, une deuxième fonction des stabilisateurs 18 est de transférer une partie des effets de pressurisation depuis les lisses 10 supportant la peau 16 vers les cadres 12.

Ces différents éléments sont généralement en matériaux composites ou métalliques.

Une structure composite peut être en composite à matrice organique et renforts fibreux sous forme de fibres continues. A titre d'exemple, ce peut être sous forme de fibres continues de carbone dans une matrice (ou résine armée de fibres de carbone dite PRFC ou selon la terminologie anglo-saxonne "*Carbon Fiber Reinforced Plastic*" CFRP), cette matrice étant thermodurcissable de type époxyde ou thermoplastique de type PEEK (polyéther éthercétone) PEKK (polyéther cétone cétone) ou PPS (poly sulfure de phénylène), le taux de fibres en applications aéronautiques étant supérieur ou égale à 50%. Par la suite lorsque l'on parle de matériau composite on fait référence à ce type de matériau.

Toujours en référence à la **figure 1****,** on distingue également différents équipements, ici un câble électrique 20 et un tuyau d'alimentation en air 22 déployés sur le fuselage et maintenus à l'aide d'éléments de fixation 24, 26 et 28 alignés parallèlement aux cadres.

Le câble électrique 20 est maintenu au cadre adjacent 12 au moyen d'une pluralité de colonnettes fixes 24, elles-mêmes fixées le long du cadre par rivetage. Le tuyau d'alimentation 22 est, quant à lui, maintenu par un collier ou harnais 26 fixé à deux pieds fixes 28. Ces derniers sont rivetés à la semelle des lisses 10.

Lors du montage de l'avion comprenant une telle structure, les colonnettes 24 et pieds 28 sont montés définitivement dès l'assemblage des cadres 12, lisses 10, clips 14 et stabilisateurs 18. Une fois cette structure 1 montée, le déploiement des faisceaux de câbles, de tuyaux et autres équipements est effectué en venant s'appuyer sur ces colonnettes et pieds.

Les cadres 12 présentent également des perçages réguliers 30 destinés à recevoir des moyens de fixation, par exemple rivets ou pions plastiques, de matelas d'isolation thermo-phonique (non représentés) venant couvrir l'ensemble de la structure 1. Ces matelas ont un dessin spécifique fonction des différents équipements 20, 22 installés. Ici, le tuyau 22 nécessite une forme particulière du matelas. Du fait que l'installation des systèmes et équipements dépende fortement de la personnalisation réalisée lors des phases d'études préalables, et donc génère de nombreuses versions, plusieurs dessins de matelas sont nécessaires pour une même section courante de fuselage 1.

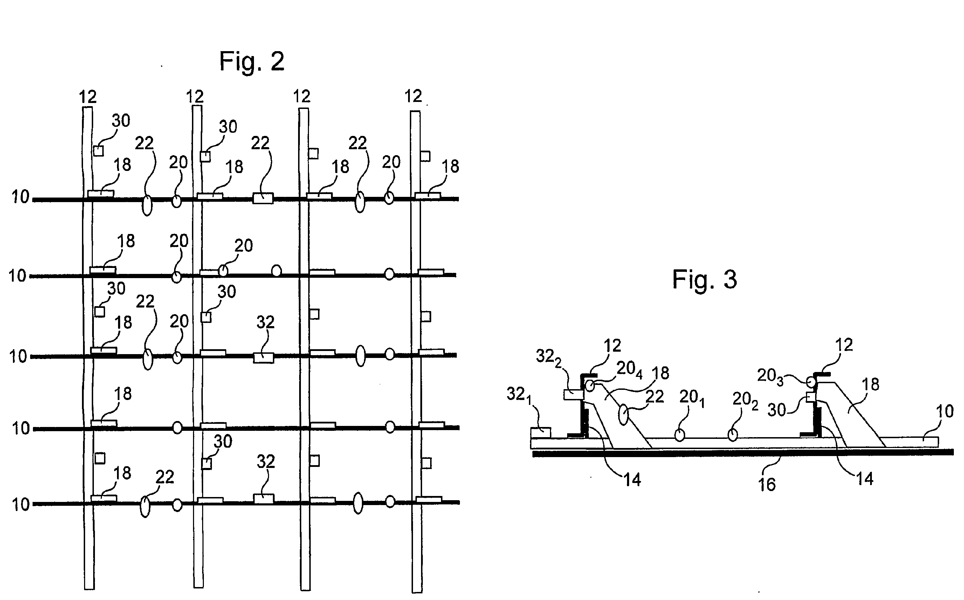

La **figure 2** présente une architecture générale de l'art antérieur où sont positionnés respectivement les fixations de canalisations d'air 22, de câbles électriques 20, de canalisations d'eau 32, et les fixations 30 de matelas d'isolation, généralement des perçages dans lesquels on fait coopérer des pions de fixation. Ces diverses fixations sont prévues soit sur un cadre 12, soit sur une lisse 10. Les fixations alignées parallèlement aux cadres 12 sont rapportées plus ou moins fréquemment et sont utilisées pour fixer un même faisceau ou conduit.

Des stabilisateurs 18 sont placés à chaque croisement cadre-lisse et sont tous orientés dans le même sens, par exemple vers l'avant de l'aéronef.

La **figure 3** illustre un autre exemple de répartition des équipements au niveau d'un lisse 10. Les fixations sont prévues sur les lisses 10 (fixations 32₁, 20₁, 20₂), sur les cadres 12 (fixations 32₂, 20₃, 30) ou sur les stabilisateurs 18 (fixations 20₄, 22), et varient fortement, ici, d'un cadre et d'un stabilisateur à l'autre.

Lors de la conception classique d'avions, de multiples demandes de points d'accrochage des équipements sont ainsi faites et chaque demande doit être validée par des calculs et si besoin est, on peut être amené à renforcer les pièces supportant ces points d'accroche. Des pièces spéciales de fixation sont notamment crées pour monter les équipements, et le cadre se trouve percé à de nombreux endroits pour accueillir ces pièces de fixation.

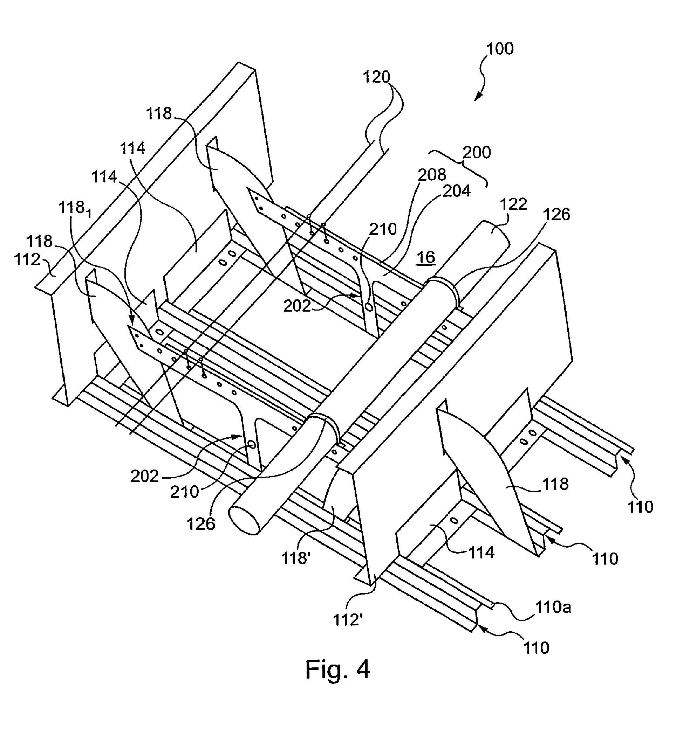

On illustre maintenant la présente invention à l'aide d'un premier exemple représenté en **figure 4****.**

Une structure primaire de fuselage 100, similaire à celle de la **figure 1****,** comprend des lisses 110 longitudinales, des cadres 112, 112', des clips 114, une peau 116 et des stabilisateurs 118, 118'.

Les stabilisateurs sont prévus, le long d'un cadre 112, de part (118) et d'autre (118') du cadre alternativement à chaque nouvelle lisse 10. Les stabilisateurs du cadre 112' adjacent sont décalés par rapport au cade 112 de telle sorte que deux stabilisateurs 118 et 118' se font face le long d'une même lisse, dans un même espace inter-cadre.

Les stabilisateurs 118' sont donc "retournés" comparé à la position de la **figure 1****,** et contribuent avec les stabilisateurs 118 prévus sur le même cadre 112 mais sur la lisse 110 voisine à une meilleure stabilité du cadre 112 puisque les stabilisateurs 118 et 118' sont répartis de part et d'autre du cadre, et l'empêchent donc de basculer à la fois vers l'avant et vers l'arrière.

Une réglette 200 en composite, de préférence en thermo-plastique plus économique que le CFRP, relie, parallèlement à une lisse 110, les deux stabilisateurs 118, 118' se faisant face au niveau de cette même lisse 110. La réglette 200 est fixée par deux rivets à chacun des stabilisateurs, et par au moins une patte centrale 202 à la semelle 110a de la lisse 110 pour une meilleure rigidité de l'ensemble.

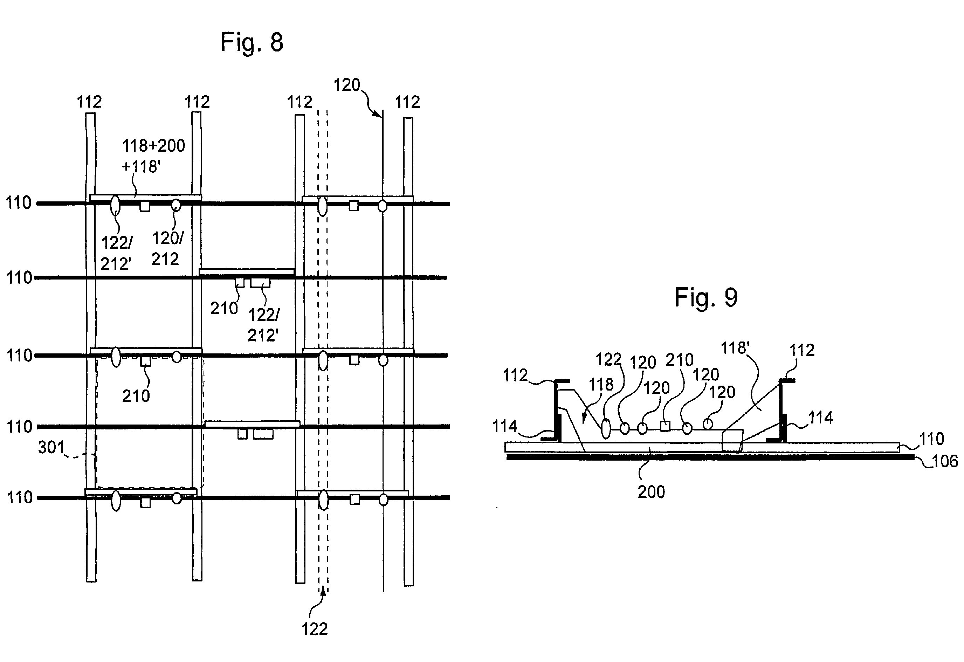

A l'échelle du fuselage, on obtient ainsi une répartition en quinconce des stabilisateurs 118, 118', ainsi que des réglettes 200 placées entre chaque paire de stabilisateurs correspondants (voir ci-dessous en référence à la **figure 8****).**

Par rapport aux stabilisateurs de l'art antérieur, ceux utilisés dans cette configuration présentent, dans la partie s'étendant vers l'autre stabilisateur correspondant, une zone supplémentaire 118₁ de matière sur laquelle est fixée la réglette 200. Cette zone supplémentaire 118₁ permet de conserver les propriétés mécaniques du stabilisateur sans être impacté par les perçages nécessaires à la fixation de la réglette.

Grâce à l'invention, on regroupe ainsi les fixations sur cette réglette 200 de sorte à ne plus percer les cadres et lisses pour la fixation des équipements et matelas.

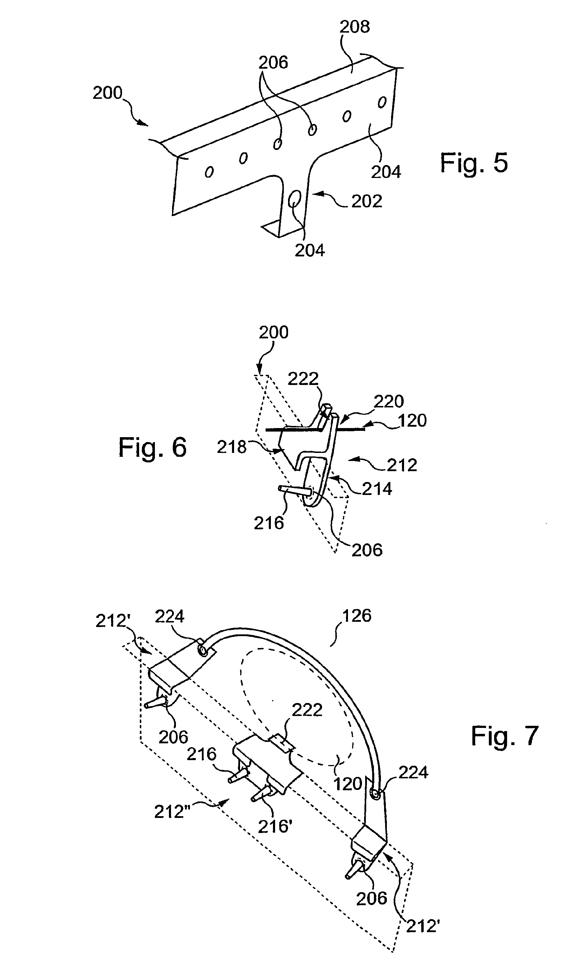

Comme illustrée en **figure 5****,** la réglette 200 est une pièce composite longiligne de section en forme de "L" renversé, dont la plus grand partie 204 est pré-percée d'un grand nombre de trous 206 répartis régulièrement, par exemple des perçages de 4 mm de diamètre et espacés d'un pas de 20 mm, et dont la petite partie 208 du "L" constitue un rebord supérieur d'appui.

La patte inférieure 202 permettant la fixation à la semelle 110a comprend également un perçage 210 destiné à recevoir des moyens de fixation correspondant des matelas d'isolation.

Cette réglette 200 permet ainsi de fournir des perçages pour la fixation d'équipements qui sont disponibles, de façon modulaire, en fonction des besoins. En outre, en utilisant une même version de réglette, on s'assure de disposer de perçages 206 tous alignés le long du fuselage.

Les **figures 6** et **7** illustrent la fixation respectivement d'un câble électrique 20 et d'un tuyau d'air 22 tels que représentés, une fois posés, sur la **figure 4****.**

Sur la **figure 6****,** on utilise un unique élément de fixation plastique 212 pour fixer le câble électrique 120 sur la réglette 200. Comme on le comprend, de ce qui précède, on utilise plusieurs de ces éléments 212, également appelés pions, sur différentes réglettes 200 pour fixer ledit câble 120 le long du fuselage.

L'élément 212 comprend, dans sa partie inférieure 214, un pion 216 qui vient s'engager, en position fixée, dans un des perçages 206 de la réglette, et, dans sa partie intermédiaire 218, une portion de section en forme de "U" renversé aux dimensions du rebord 208 de la réglette et qui vient clipser ledit rebord 208. La présence combinée du pion 216 et de la portion 218 en "U" renversé assure un maintien de l'élément 212 sur la réglette 200 par clipsage.

La nature élastique du plastique permet d'engager en force l'élément sur la réglette jusqu'à ce que le clip se referme lorsque la partie en "U" inversé passe derrière le rebord 208.

L'utilisation de tels éléments 212 permet une grande souplesse d'utilisation, puisque des mêmes "clips" 212 peuvent être utilisés pour l'ensemble des perçages 206 dans tout l'avion, et que ceux-ci peuvent être retirés le cas échéant, par exemple en cas de modification des réseaux embarqués.

La partie supérieure 220 du pion 212 comprend un moyen de fixation, ici une pince 222 pour le câble électrique 120 réalisée sous forme d'entaille crantée dans cette partie supérieure 220.

Sur la **figure 7****,** on a représenté un ensemble de trois pions pour fixer un conduit 122. Deux pions latéraux 212', similaires à ceux de la **figure 6****,** sont pourvus, dans leur partie supérieure 220, non plus d'une pince, mais d'un oeillet 224.

Un pion centrale 212" est, quant à lui, muni, dans sa partie supérieure 220, d'une zone d'appui 222, éventuellement incurvée selon le conduit 122 à fixer. La partie inférieure 214 de cet élément de fixation 212" comprend deux pions 216 et 216' venant, en position fixée, coopérer avec deux perçages 206 voisins. On assure ainsi une meilleure stabilité de cet élément 212".

En variante, on peut, bien entendu, prévoir que les éléments de fixation 212, 212' et 212" présentent deux voire plus de pions 216 de sorte à accroître d'autant leur stabilité aux efforts.

Comme représenté sur la **figure 7** où l'on distingue la section du conduit 122, la fixation de ce dernier est opérée par le maintien du conduit 122 contre la zone 222 à l'aide d'une sangle ou d'un collier plastique 126 fixé aux deux oeillets 224 des pions latéraux 212'.

Grâce à cette réglette 200 pré-percée, il est aisé de déplacer les pions latéraux 212' et d'adapter le collier 126 afin de fixer des conduits 122 de tailles très variables.

Sur la **figure 8****,** on a représenté, d'une façon similaire à la **figure 2****,** l'architecture résultant de la mise en oeuvre de l'invention.

Les ensembles formés des stabilisateurs se faisant face 118, 118' et d'une réglette 200 sont disposés en quinconce dans le fuselage. Chaque ensemble supporte ainsi les différentes fixations pour les conduits 122, câbles 120, matelas d'isolation et autres équipements.

En positionnant les pions 212, 212' et 212" au niveau des mêmes trous 206 dans les différentes réglettes 200 le long d'un cadre 112, on obtient ainsi aisément un déploiement régulier et propre des câbles et tuyaux.

On a représenté, en **figure 9****,** un second mode de réalisation de l'invention. Dans ce dernier, la réglette 200, telle que décrite ci-dessus, est intégrée à l'un des stabilisateurs 118, 118' en une même pièce, et est fixée à son extrémité libre à l'autre stabilisateur, comme décrit ci-dessus.

L'utilisation d'une réglette 200 intégrée à l'un des stabilisateurs laisse une grande liberté dans le détourage de la partie supérieure de la réglette 200 pour former directement des supports d'équipements sur cette réglette, par exemple pour un tuyau d'air.

Comme représentée sur cette figure, la réglette 200 est fixée tout du long à la semelle 110a de la lisse, offrant ainsi une rigidité accrue de la structure de fuselage 100.

Dans ce cas, on prévoit des trous 210 pour le matelas d'isolation qui sont dans la partie inférieure de la réglette par rapport aux trous 206 pour la fixation des équipements. Comme on le verra par la suite, cela permet de fixer les matelas d'isolation plus près de la peau 116 que les équipements 120, 122 et ainsi de ne pas tenir compte de ces derniers dans le dessin de ces matelas.

En variante, la réglette peut être surélevée par rapport à la lisse, comme proposé précédemment en lien avec la **figure 4****,** par l'utilisation d'une ou plusieurs pattes 202.

En variante toujours, la réglette 200 peut être formée de deux moitiés de réglettes, chacune étant intégrée à l'un des stabilisateurs 118, 118'. La fixation des deux moitiés est réalisée au niveau de leurs extrémités libres respectives par des moyens appropriés tels des rivets. Une patte de fixation à la semelle 110a intégrant un trou 210 de fixation d'un matelas est prévue sur chacune des demi-réglettes. Cette configuration permet notamment d'utiliser un seul type de stabilisateur 118 muni d'une moitié de réglette, pour former une réglette et donc l'ensemble du fuselage.

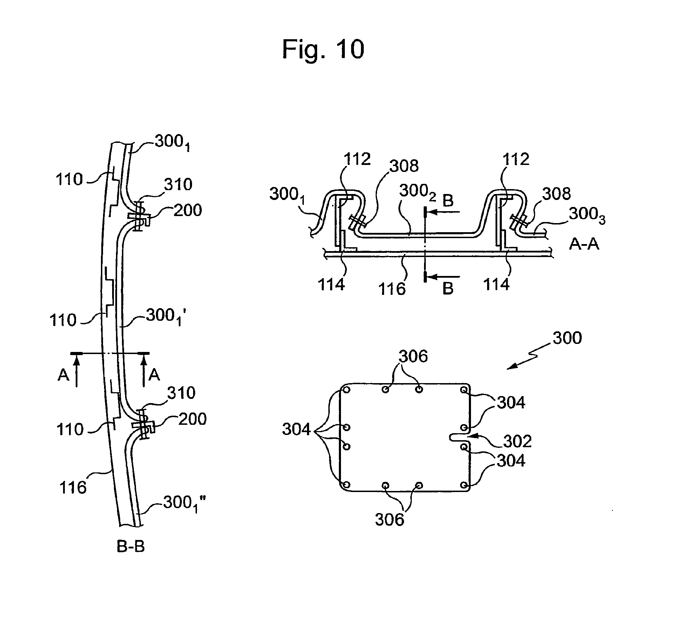

On illustre, par la **figure 10****,** un exemple de fixation d'un matelas d'isolation 300 de type souple, fabriqué par exemple par superposition de plusieurs couches telles que de la laine de roche, du tissu hydrofuge. Un matelas 300 est prévu pour venir couvrir sensiblement une zone définie entre deux réglettes 200 consécutives et deux cadres 112 consécutifs (voir zone de couverture 301 sur la **figure 8****).**

Le matelas d'isolation 300 est sensiblement de forme rectangulaire avec une découpe 302 au milieu de l'un des côtés. Comme on le verra par la suite, cette découpe 302 est prévue pour épouser les contours d'un stabilisateur 318.

Le matelas 300 présente également des trous 304 prévus sur deux côtés opposés incluant celui avec la découpe 302, pour fixer le matelas à des trous correspondant d'autres matelas, et des trous 306 prévus sur les deux autres côtés pour fixer celui-ci aux réglettes 200 délimitant sa zone de couverture 301.

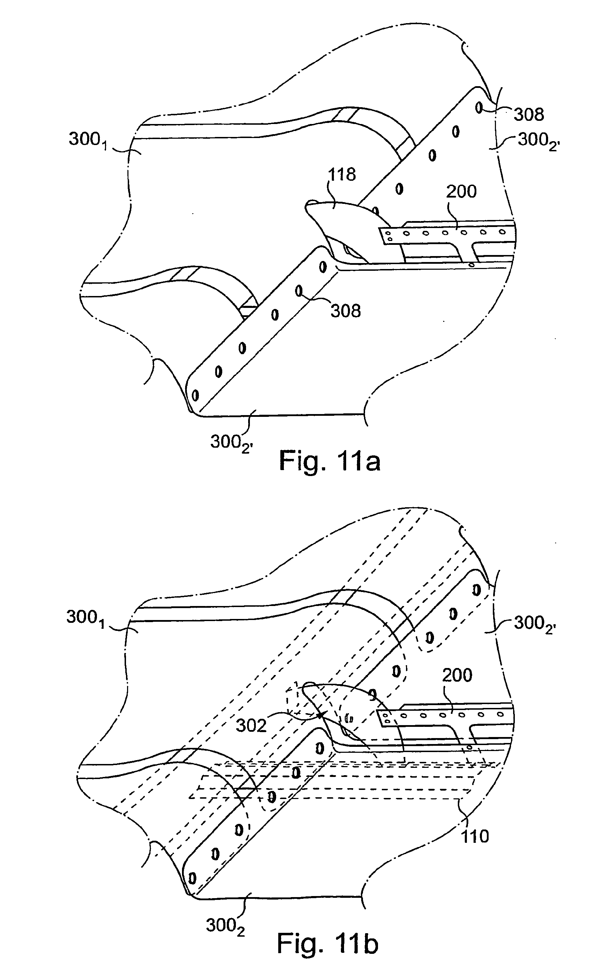

Comme illustré sur la coupe A-A parallèle à une lisse 110, le matelas 300₂ est déposé, dans sa plus grande partie, parallèlement à la peau 116. Il est fixé, au niveau des trous 304 et à l'aide de pions plastiques 308 adaptés, aux trous 304 des matelas 300₁, 300₃ des zones voisines. Sur cette figure, on observe que le matelas 300₂ vient envelopper le cadre 112. La découpe 302 est ainsi prévue pour venir épouser le stabilisateur 118 qui se situe à mi largeur (du fait de l'architecture en quinconce) afin de descendre au niveau du matelas voisin. La **figure 11** représente clairement cette zone.

Comme on le comprend de la **figure 8** montrant l'architecture en quinconce et de la **figure 11****,** le matelas 300₁ d'une zone 301 est fixé d'un côté à deux matelas voisins 300₂, 300₂' par moitié, et de l'autre côté à deux autres matelas voisins par moitié.

En référence maintenant à la coupe B-B parallèle à un cadre 112, le matelas 300₁ est fixé, au niveau de ses trous 306, au(x) perçage(s) 210 de la réglette 200, en particulier à l'aide de pions plastiques 310. Sur la figure, on utilise un même trou 210 pour fixer, à l'aide d'un seul pion plastique, les deux matelas 300₁, 300₁' adjacents à une même réglette 200.

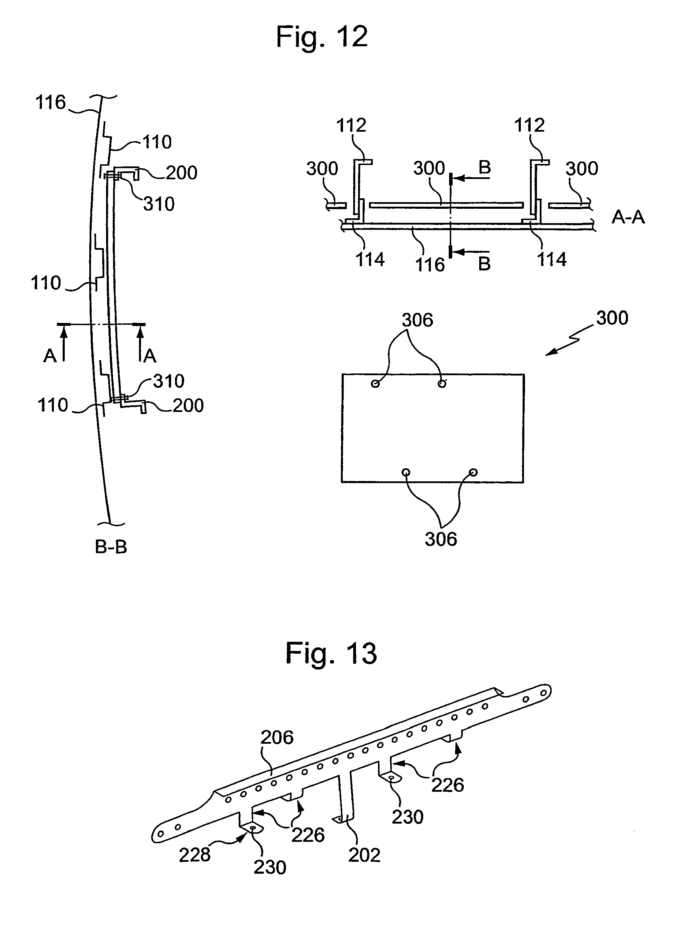

Sur la **figure 12****,** on a représenté un deuxième exemple de fixation d'un matelas d'isolation 300, cette fois-ci de type rigide. Il s'agit par conséquent de plaques rigides rectangulaires aux dimensions de la zone 301.

Dans cet exemple, les plaques 300 présentent uniquement des trous 306 de fixation aux réglettes 200 de deux côtés opposés.

Une réglette 200 adaptée à cet exemple est représentée en figure 13. La réglette 200 comprend, dans une partie inférieure aux perçages 206, des pattes 226 en forme de "L" prolongeant vers le bas la portion principale de ladite réglette. Dans l'exemple de la figure, on prévoit deux pattes orientées alternativement des deux côtés de la réglette 200 de sorte à fournir des moyens de fixation des matelas des deux côtés.

Le retour 228 du "L" des pattes 226 est muni d'un perçage 230 prévu pour coopérer, au moyen de pions plastiques 310, avec les trous 306 du matelas.

Selon que les réglettes sont situées en haut ou au bas du fuselage, on peut disposer les matelas d'un côté ou de l'autre du retour 228 de la patte afin que ce dernier (228) joue un rôle de support du matelas avec la pesanteur. On réduit ainsi les efforts soumis sur les pions de fixation 310.

Sur la coupe A-A, on remarque que les matelas 300 ne sont pas reliés aux cadres 112. Sur la coupe B-B, on observe que les matelas 300 sont fixés uniquement aux réglettes 200 par les pions 310.

Dans cette configuration, les matelas voisins ne sont pas reliés entre eux, contrairement au premier exemple ci-dessus.

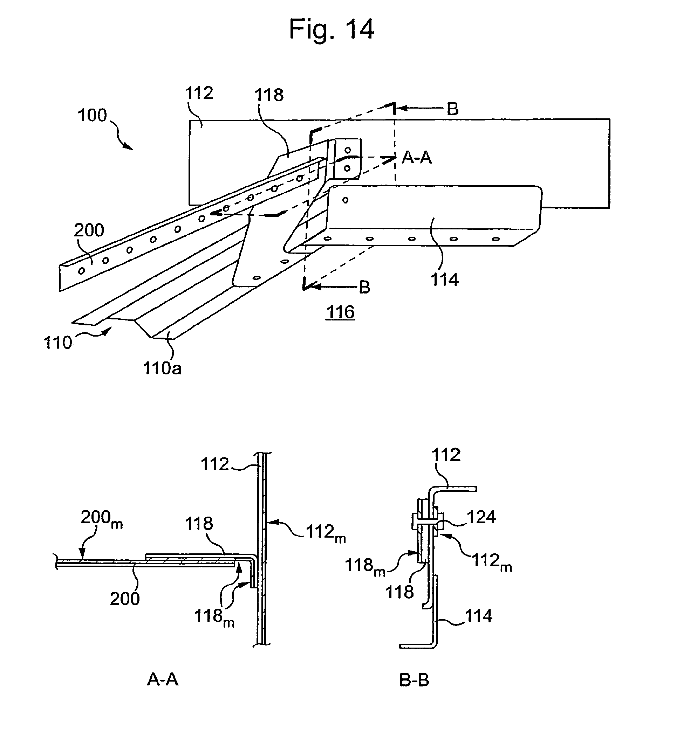

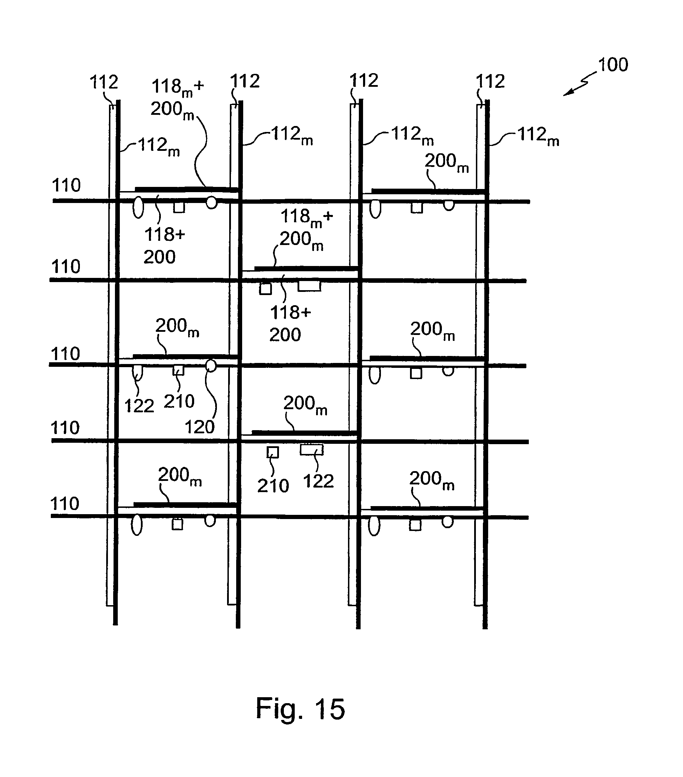

On illustre, en référence aux **figures 14** et **15****,** la métallisation des surfaces des éléments composant la structure 100 afin de fournir à l'avion un maillage métallique propice à conférer une protection électromagnétique des systèmes électriques qu'il embarque, tels des cartes électroniques.

On a représenté la structure 100 du fuselage avec la réglette 200 dépourvue des pions de fixations, de matelas d'isolation et d'équipements fixés à celle-ci.

Le cadre 112, le stabilisateur 118 et la réglette 200 ont chacun une portion principale composite sensiblement plane dont une section est montrée sur la coupe A-A.

Chacun de ces trois éléments de la structure 100 présente, sur une face uniquement de cette portion principale, un revêtement métallique 112ₘ, 118ₘ et 200ₘ par exemple en cuivre, aluminium ou bronze ou tout alliage électriquement conducteur. La face opposée est ainsi dépourvue de surface conductrice électriquement. Ce revêtement métallique peut consister en un pli de la structure composite de ces éléments intégré lors du processus de fabrication. En variante, le revêtement peut être déposé ultérieurement par simple collage d'un feuillard métallique.

Sur la coupe A-A, les stabilisateur 118 et réglette 200 sont fixés l'un à l'autre par leurs faces métalliques 118ₘ et 200ₘ. Un rivetage de ces deux éléments permet de maintenir un contact physique permanent entre ces deux faces métalliques.

Les stabilisateur 118 et cadre 112 sont fixés, quant à eux, l'un à l'autre par leurs faces non métalliques.

Sur la coupe B-B représentant la fixation entre le stabilisateur 118 et le cadre 112, on utilise un ou plusieurs rivets traversants métalliques 124 en cuivre, aluminium ou bronze ou tout autre alliage électriquement conducteur qui maintient serrées les deux faces non métalliques des deux éléments de structure. Les deux têtes du ou des rivets 124 sont en contact direct avec le revêtement métallique de respectivement le stabilisateur 118 et du cadre 112. Ainsi, le(s) rivet(s) 124 assure la continuité de la conduction électrique entre le stabilisateur 118 et le cadre 112.

Le courant électromagnétique capté par ces revêtements électriques est ainsi renvoyé à la masse de l'aéronef.

Sur la **figure 15****,** on observe le maillage métallique électriquement conducteur ainsi obtenu une partie de la structure 100.

Le revêtement 112ₘ des cadres 112 assure le maillage vertical, correspondant sensiblement à la périphérie d'une section de cabine/fuselage, alors que les revêtements 118ₘ et 200ₘ combinés assurent des portions de maillage horizontal entre deux cadres 112 consécutifs.

Le contact "électriquement conducteur" entre ces deux maillages vertical et horizontal est notamment assuré par le(s) rivet(s) 124 comme montré sur la coupe B-B de la **figure 14****.**

Les exemples qui précèdent ne sont que des modes de réalisation de l'invention qui ne s'y limite pas.

Notamment, les fixations des éléments de structure de fuselage ci-dessus, sont généralement illustrées au moyen de rivetage. D'autres techniques bien connues, tels que le collage peuvent être appliquées dans la cadre de la présente invention.

Par ailleurs, quelque soit le mode de réalisation, la réglette 200 peut être détourée au niveau de sa partie supérieure pour former directement, dans l'épaisseur de celle-ci, un support aux câbles ou tuyaux ou autre équipement. Ces détourages "support" sont combinables avec les systèmes d'accroche par pions, plus modulables.

## Revendications

1. Structure (100) de fixation combinée de matelas d'isolation (300) et d'équipements (120, 122) sur le fuselage d'un aéronef formé au moins de cadres (112) et de lisses (110), ladite structure comprenant une structure primaire de fuselage comportant des cadres (112), des lisses (110) et des stabilisateurs (118, 118') de fuselage reliant les cadres aux lisses,
- deux stabilisateurs (118, 118') de deux cadres successifs (112, 112') se faisant face entre les deux cadres successifs, et
- ladite structure comprenant une réglette (200) reliant lesdits deux stabilisateurs et comprenant des moyens de fixation (206, 212, 212', 212") agencés pour recevoir des moyens correspondants de fixation desdits matelas d'isolation (300) et d'équipements (120, 122).

2. Structure (100) de fixation selon la revendication 1, dans laquelle lesdits moyens de fixation de la réglette (200) comprennent une pluralité de perçages (206) préformés agencés pour recevoir lesdits moyens correspondants de fixation et disposées dans la partie (204) de la réglette entre les deux stabilisateurs.

3. Structure (100) de fixation selon l'une des revendications précédentes, dans laquelle au moins une partie de ladite réglette (200) constitue une partie d'un des deux stabilisateurs (118, 118').

4. Structure (100) de fixation selon la revendication précédente, dans lequel les deux stabilisateurs (118, 118') comprennent, chacun, une portion s'étendant sous forme de partie de réglette (200) et sont fixés l'un à l'autre par les extrémités libres respectives des deux parties de réglette.

5. Structure (100) de fixation selon l'une des revendications précédentes, comprenant une pluralité de réglettes (200) reliant une pluralité respective de paires de stabilisateurs (118, 118') se faisant face et disposée en quinconce dans ladite structure primaire de fuselage.

6. Structure (100) de fixation selon l'une des revendications précédentes, dans laquelle ladite réglette (200) comprend une âme plane (204) et un rebord supérieur (208) perpendiculaire à l'âme principale de sorte à former une surface de support desdits équipements à fixer (120, 122).

7. Structure (100) de fixation selon la revendication 6, dans lequel lesdits moyens de fixation de la réglette (200) comprennent une pluralité de perçages (206) prévus dans ladite âme (204) et au moins un élément de fixation (212, 212', 212"), ledit élément de fixation présentant une partie basse (214) pourvue d'un pion (216) apte à s'engager dans un des perçages (206), une partie intermédiaire (218) localement en forme de "U" renversé et de dimension sensiblement égale audit rebord supérieur (208) de sorte à venir s'appuyer dessus, et une partie supérieure (220) comprenant un moyen de maintien ou de support (222, 224) desdits équipements (120, 122).

8. Structure (100) de fixation selon la revendication 6 ou 7, dans laquelle ladite réglette (200) comprend des pattes (226) en forme de "L" s'étendant sous ladite âme (204) et alternativement orientées de part et d'autre de ladite âme, chaque patte comprenant, dans le retour (228) du "L", au moins un moyen de fixation (230) apte à recevoir un matelas d'isolation (300).

9. Structure (100) de fixation selon l'une des revendications précédentes, dans laquelle ladite réglette (200), les stabilisateurs (118, 118') et le cadre (112) comprennent une face métallisée (200ₘ, 118ₘ, 112ₘ) et une face non métallisée, ladite réglette et un stabilisateur étant fixés par leurs faces métallisées, chaque stabilisateur et le cadre correspondant étant fixés au niveau de leurs faces non métallisées par des moyens de fixation (124) traversant assurant une conduction électrique entre leurs faces métallisées opposées (118ₘ, 112ₘ).

10. Aéronef comprenant une structure (100) de fixation selon l'une quelconque des revendications précédentes.

## Claims

1. Structure (100) for combined fastening of insulation mattresses (300) and equipment items (120, 122) on the fuselage of an aircraft made up at least of frames (112) and stringers (110), the said structure comprising a primary fuselage structure comprising frames (112), stringers (110) and fuselage stabilizers (118, 118') connecting the frames to the stringers
- two stabilizers (118, 118') of two successive frames (112, 112') facing one another between the two successive frames, and
- the said structure comprising a strip (200) connecting the said two stabilizers and comprising fastening means (206, 212, 212', 212") arranged to receive corresponding means for fastening the said insulation mattresses (300) and equipment items (120, 122).

2. Fastening structure (100) according to claim 1, in which the said fastening means of the strip (200) comprise a plurality of preformed borings (206) arranged to receive the said corresponding fastening means and disposed in the part (204) of the strip between the two stabilizers.

3. Fastening structure (100) according to one of the preceding claims, in which at least a part of the said strip (200) constitutes a part of one of the two stabilizers (118, 118').

4. Fastening structure (100) according to the preceding claim, in which the two stabilizers (118, 118') each comprise a portion extending in the form of part of a strip (200) and are fastened to one another by the respective free ends of the two strip parts.

5. Fastening structure (100) according to one of the preceding claims, comprising a plurality of strips (200) connecting a respective plurality of pairs of stabilizers (118, 118') facing each other and disposed in staggered arrangement in the said primary fuselage structure.

6. Fastening structure (100) according to one of the preceding claims, in which the said strip (200) comprises a flat web (204) and an upper rim (208) perpendicular to the main core so as to form a support surface for the said equipment items to be fastened (120, 122).

7. Fastening structure (100) according to claim 6, in which the said fastening means of the strip (200) comprise a plurality of borings (206) provided in the said web (204) and at least one fastening element (212, 212', 212"), the said fastening element having a lower part (214) provided with a pin (216) able to engage in one of the borings (206), an intermediate part (218) locally in the shape of an inverted "U" and of a size substantially equal to the said upper rim (208) so as to come to bear thereon, and an upper part (220) comprising a holding or support means (222, 224) for the said equipment items (120, 122).

8. Fastening structure (100) according to claim 6 or 7, in which the said strip (200) comprises "L"-shaped lugs (226) extending underneath the said web (204) and alternately oriented on opposite sides of the said web, each lug comprising, in the folded portion (228) of the "L", at least one fastening means (230) able to receive an insulation mattress (300).

9. Fastening structure (100) according to one of the preceding claims, in which the said strip (200), the stabilizers (118, 118') and the frame (112) comprise a metallized face (200ₘ, 118ₘ, 112ₘ) and a non-metallized face, the said strip and a stabilizer being fastened by their metallized faces, each stabilizer and the corresponding frame being fastened at their non-metallized faces by traversing fastening means (124) ensuring electrical conduction between their opposite metallized faces (118ₘ, 112ₘ).

10. An aircraft comprising a fastening structure (100) according to any one of the preceding claims.

## Patentansprüche

1. Befestigungsstruktur (100) zur kombinierten Befestigung von Isoliermatten (300) und Ausstattungsteilen (120, 122) an dem Rumpf eines Luftfahrzeugs, der zumindest aus Spanten (112) und Stringern (110) gebildet ist, wobei die Struktur eine Rumpf-Primärstruktur aufweist, die Spante (112), Stringer (110) und Rumpfstabilisatoren (118, 118') enthält, welche die Spante mit den Stringern verbinden,
- wobei zwei Stabilisatoren (118, 118') zweier aufeinanderfolgender Spante (112, 112') sich zwischen den beiden aufeinanderfolgenden Spanten gegenüberliegen, und
- die Struktur eine Verbindungsleiste (200) aufweist, welche die beiden Stabilisatoren verbindet und Befestigungsmittel (206, 212, 212', 212") enthält, die dazu vorgesehen sind, entsprechende Befestigungsmittel zum Befestigen der Isoliermatten (300) und der Ausstattungsteile (120, 122) aufzunehmen.

2. Befestigungsstruktur (100) nach Anspruch 1,
wobei die Befestigungsmittel der Verbindungsleiste (200) eine Mehrzahl von vorgeformten Bohrungen (206) aufweisen, die dazu vorgesehen sind, die entsprechenden Befestigungsmittel aufzunehmen und die in einem Teil (204) der Verbindungsleiste zwischen den beiden Stabilisatoren angeordnet sind.

3. Befestigungsstruktur (100) nach einem der vorangehenden Ansprüche,
wobei zumindest ein Teil der Verbindungsleiste (200) einen Teil eines der beiden Stabilisatoren (118, 118') bildet.

4. Befestigungsstruktur (100) nach dem vorangehenden Anspruch, wobei die beiden Stabilisatoren (118, 118') jeweils einen Abschnitt aufweisen, der sich in Form eines Teils der Verbindungsleiste (200) erstreckt, und mit den jeweils freien Enden der beiden Verbindungsleistenteile aneinander befestigt sind.

5. Befestigungsstruktur (100) nach einem der vorangehenden Ansprüche,
enthaltend eine Mehrzahl von Verbindungsleisten (200), die mehrere Paare von einander gegenüberliegenden Stabilisatoren (118, 118') verbinden und in der Primärstruktur des Rumpfs versetzt angeordnet sind.

6. Befestigungsstruktur (100) nach einem der vorangehenden Ansprüche,
wobei die Verbindungsleiste (200) einen flachen Steg (204) und eine senkrecht zum Hauptsteg verlaufende obere Randkante (208) aufweist, so dass eine Abstützfläche für die zu befestigenden Ausstattungsteile (120, 122) gebildet ist.

7. Befestigungsstruktur (100) nach Anspruch 6,
wobei die Befestigungsmittel der Verbindungsleiste (200) eine Mehrzahl von Bohrungen (206), die in dem Steg (204) vorgesehen sind, und zumindest ein Befestigungselement (212, 212', 212") aufweisen, wobei das Befestigungselement einen unteren Teil (214) aufweist, der mit einem Zapfen (216) versehen ist, welcher in eine der Bohrungen (206) eingreifen kann, einen bereichsweise in umgekehrter U-Form ausgebildeten Zwischenteil (218) mit im Wesentlichen gleicher Abmessung wie die obere Randkante (208), um sich darauf abzustützen, sowie einen oberen Teil (220), der ein Halte- bzw. Tragmittel (222, 224) für die Ausstattungsteile (120, 122) aufweist.

8. Befestigungsstruktur (100) nach Anspruch 6 oder 7,
wobei die Verbindungsleiste (200) L-förmige Laschen (226) aufweist, die sich unter dem Steg (204) erstrecken und abwechselnd nach beiden Seiten des Stegs gerichtet sind, wobei jede Lasche an dem Rücksprung (228) des "L" zumindest ein Befestigungsmittel (230) aufweist, das eine Isoliermatte (300) aufnehmen kann.

9. Befestigungsstruktur (100) nach einem der vorangehenden Ansprüche,
wobei die Verbindungsleiste (200), die Stabilisatoren (118, 118') und der Spant (112) eine metallisierte Fläche (200ₘ, 118ₘ, 112ₘ) und eine nicht metallisierte Fläche aufweisen, wobei die Verbindungsleiste und ein Stabilisator an ihren metallisierten Flächen befestigt sind, wobei jeder Stabilisator und der entsprechende Spant im Bereich ihrer nicht metallisierten Flächen über durchgehende Befestigungsmittel (124) befestigt sind, die eine Stromleitung zwischen ihren entgegengesetzten, metallisierten Flächen (118m, 112m) gewährleisten.

10. Luftfahrzeug mit einer Befestigungsstruktur (100) nach einem der vorangehenden Ansprüche.
